# EUROPEAN PATENT SPECIFICATION

(11) **EP 2 562 985 B1**
(45) Date of publication and mention of the grant of the patent: **10.02.2016**
(21) Application number: 12181816.5
(22) Date of filing: 24.08.2012
(51) Int. Cl.: H04W 4/00, H04W 12/04, H04L 12/24

(54) **Communication device, communication system and method of sharing communication setup information**
Kommunikationsvorrichtung, Kommunikationssystem und Verfahren zur gemeinsamen Nutzung der Kommunikationseinstellungsinformation
Dispositif de communication, système de communication et procédé de partage des informations de configuration de communication

(30) Priority: 25.08.2011 JP 2011183744
(43) Date of publication of application: 27.02.2013
(73) Proprietor: Buffalo Inc., Nagoya-shi, Aichi 460-8315 (JP)
(72) Inventor: Inada, Tetsuya, Nagoya-shi, Aichi 460-8315 (JP)
(74) Representative: Taylor, Adam David

(56) References cited:
- WO-A1-2011/073495
- GB-A- 2 455 059
- GB-A- 2 468 739
- JP-A- 2008 524 918
- US-A1- 2003 131 090
- US-B1- 7 305 081

## Description

### BACKGROUND OF THE INVENTION

### Field of the Invention

The invention relates to a technique of sharing communication setup information to make wireless communication between a plurality of communication devices.

### Description of Related Art

There are known communication devices that enable both wireless communication and wired communication, such as PLC (Power Line Communication), as an access point (e.g., JP 2008-524918A). Even when wireless communication is not allowed between two communication devices, wired communication between the two communication devices with PLC enables communication between a wireless terminal connected with one of the communication devices for wireless communication and a wireless terminal connected with the other of the communication devices for wireless communication. For example, two communication devices that are located out of their respective coverage areas are not allowed to make wireless communication. In another example, the presence of a building wall between two communication devices may interfere with wireless communication between the two communication devices.

Many portable wireless terminals have been developed recently. The user often carries such a portable wireless terminal to use the portable wireless terminal in a plurality of different locations. In the environment that one wireless terminal may be used in a plurality of different locations, it is desired to unify communication setup information with respect to wireless communication, such as ESSID (Extended Service Set Identifier) and encryption settings, configured in communication devices in the respective locations. When the communication setup information is not unified, the user is required to change the communication setup information every time the wireless terminal establishes connection for wireless communication with a different communication device. The operations required to change the communication setup information are, however, rather troublesome for the user. Unifying the communication setup information enables the wireless terminal to establish connections for wireless communication with a plurality of communication devices without changing the communication setup information, thus providing a seamless wireless roaming environment.

In order to use the unified communication setup information, the user is generally required to enter the same communication setup information in the respective communication devices. The operations required for such entries are, however, rather troublesome for the user. Additionally, the user who is unfamiliar with wireless communication may have difficulties in such entries. There is accordingly a need to provide a technique that enables communication setup information with respect to wireless communication to be readily shared between a plurality of communication devices.

GB 2468739 discloses a multimedia communication session coordination system in which parties establish a connection over an entrusted data network by exchanging setup information across a telephone network.

GB 2455059 discloses a method of transmitting device pairing information over multiple channels in response to some stimulus initiating pairing.

In some working conditions of the network, the user may demand to change the communication setup information configured in advance in the unified manner. In this case, it is desirable for the user to readily change the communication setup information. When the user demands to change the communication setup information configured in advance in the unified manner, such a change may be undesirable in some cases. For example, when a wireless terminal compatible with only an encryption system of the low security level, such as WEP (Wired Equivalent Privacy), needs to temporarily join the network, it is undesirable to lower the security level of the communication settings in the plurality of communication devices belonging to the network to the security level of this newly joining wireless terminal. There is accordingly a need to enable a plurality of communication devices to flexibly use the communication setup information without limiting the use of only the unified communication setup information.

In order to achieve at least part of the foregoing, the disclosure provides various aspects and embodiments described below.

### SUMMARY

According to a first aspect, there is provided a communication device configurable as one of a plurality of communication devices, such that each enables wireless communication as an access point and enables the wireless communication based on common communication setup information. This communication device comprises: a wireless communicator that enables wireless communication as an access point, based on communication setup information; a wired communicator that enables communication by a wired interface, wherein the wired interface is a power line interface; an operating mode setter that sets one of two operating modes in the communication device, wherein the two operating modes include a first operating mode that provides another communication device with the communication setup information and a second operating mode that receives the communication setup information from another communication device working in the first operating mode; and a provider that provides the another communication device working in the second operating mode with the communication setup information for functioning as the wireless access point by communication via the wired interface, when the communication device works in the first operating mode.

The communication device according to the first aspect enables the communication setup information to be shared with another communication device, thus providing seamless wireless roaming environment.

The invention is not limited to the communication device described above but may be implemented by any of various other applications, e.g., a communication method, a method of sharing communication setup information, a program for the communication device and a storage medium in which the program is recorded. The technical features disclosed in the first aspect may be adopted for any of these applications. The following describes a communication system according to a second aspect of the invention, which may include a plurality of second communication devices.

According to an embodiment, there is provided a communication system including a first communication device and a second communication device that respectively enable wireless communication as an access point and enable the wireless communication based on common communication setup information. Each of the first communication device and the second communication device comprises: a wireless communicator that enables wireless communication as an access point, based on communication setup information; and a wired communicator that enables communication by a wired interface, wherein the wired interface is a power line interface. Each of the first communication device and the second communication device is set in one of two operating modes, wherein the two operating modes include a first operating mode that provides another communication device with the communication setup information and a second operating mode that receives the communication setup information from the communication device working in the first operating mode. The communication device working in the first operating mode provides the communication device working in the second operating mode with the communication setup information for functioning as the wireless access point by communication via the wired interface. The communication device working in the second operating mode receives the communication setup information from the communication device working in the first operating mode and configures the wireless communication based on the received communication setup information.

According to a second aspect, there is provided a method of sharing communication setup information to make wireless communication between a plurality of communication devices, each including a wireless communicator that enables wireless communication as a wireless access point and a wired communicator that enables communication via a wired interface, wherein the wired interface is a power line interface. The method sets one communication device out of the plurality of communication devices to work in a first operating mode that provides another communication device with the communication setup information. The method sets the another communication device to work in a second operating mode that receives the communication setup information from the one communication device working in the first operating mode. The method provides the communication setup information for functioning as the wireless access point from the one communication device working in the first operating mode to the another communication device working in the second operating mode by communication via the wired interface. The method configures the wireless communication in the another communication device working in the second operating mode, based on the communication setup information provided from the one communication device working in the first operating mode.

### BRIEF DESCRIPTION OF THE DRAWINGS

Fig. 1 illustrates the general structure of a network system 20 according to one embodiment of the invention;
Fig. 2 illustrates the general structure of a communication device 100 included in the network system 20;
Fig. 3 is a flowchart showing a flow of operating mode setting process performed in the communication device 100;
Fig. 4 is a sequence diagram showing a flow in a new setup phase;
Fig. 5 is a sequence diagram showing a flow in a setup sharing phase;
Fig. 6 is a sequence diagram showing a flow in a setup changing phase to change setup information in response to a request from a slave;
Fig. 7 is a sequence diagram showing a flow in the setup changing phase when the request from the slave is approved;
Fig. 8 is a sequence diagram showing a flow in the setup changing phase when the request from the slave is denied;
Fig. 9 is a flowchart showing a flow of operation in a standalone mode; and
Fig. 10 is a sequence diagram showing a flow of operation in the standalone mode according to one modification.

### DESCRIPTION OF THE PREFERRED EMBODIMENTS

### A. Embodiment

The following describes embodiments of the invention by way of example only, with reference to the accompanying drawings.

### A-1. General Structure of Network System 20

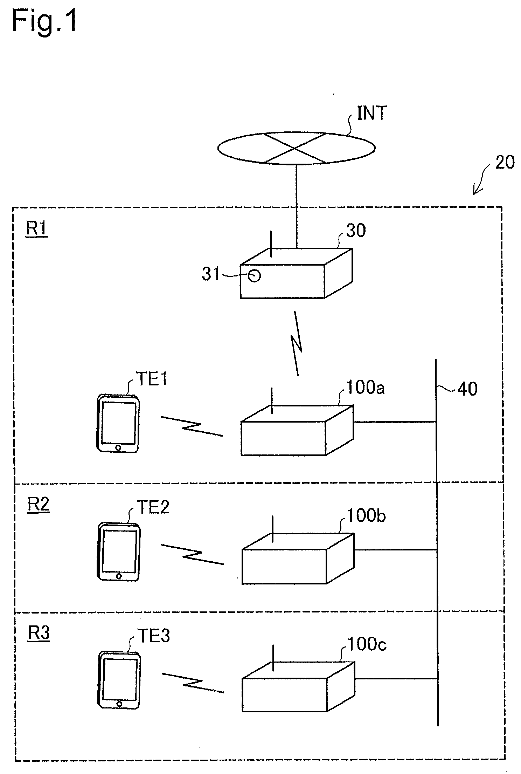

Fig. 1 schematically illustrates the general structure of a network system 20 including a plurality of communication devices 100a to 100c according to one embodiment of the communication device. As illustrated, the network system 20 includes a gateway 30, communication devices 100a to 100c and wireless terminals TE1 to TE3. According to this embodiment, the communication devices 100a to 100c have an identical structure. In the description hereinafter, the communication devices 100a to 100c are collectively referred to as communication device 100.

The gateway 30 is a gateway device that provides triple play service and has router functions. The "triple play" service provides three different types of services, i.e., data communication, VoIP (Voice over Internet Protocol) telephone, and video delivery. As shown in Fig. 1, the gateway 30 is connected to the Internet INT. The gateway 30 is also connected with a telephone. The gateway 30 is further connected with a TV set via a set-top box. The gateway 30 may further be connected with a personal computer by a LAN cable.

The gateway 30 has a wireless communication interface to enable wireless communication. According to the embodiment, the gateway 30 makes wireless communication in conformity with the IEEE802.11 standard. The wireless communication interface of the gateway 30 serves as an access point. The gateway 30 supports WPS (Wi-Fi Protected Setup) and has a button 31 operated to provide a start command for starting a WPS process.

The communication device 100 serves as an access point to enable wireless communication. The communication device 100 is connected to a power line 40 and establishes communication with PLC via the power line 40. According to this embodiment, the gateway 30 is not configured to establish communication with PLC. Alternatively the gateway 30 may, however, be configured to establish communication with PLC.

Each of the wireless terminals TE1 to TE3 serves as a station to enable wireless communication. As shown in Fig. 1, the wireless terminal TE1 is wirelessly connected with the communication device 100a. Similarly the wireless terminal TE2 is wirelessly connected with the communication device 100b, and the wireless terminal TE3 is wirelessly connected with the communication device 100c.

The broken lines in Fig. 1 indicate division of rooms. As illustrated, the component devices of the network system 20 are placed in a distributed manner in different rooms R1 to R3. The gateway 30, the communication device 100a and the wireless terminal TE1 are located in the room R1. The communication device 100b and the wireless terminal TE2 are located in the room R2. The communication device 100c and the wireless terminal TE3 are located in the room R3. In the working environment according to the embodiment, it is assumed that the rooms R1 to R3 have sufficiently thick walls and that the respective communication devices 100a to 100c are not able to make wireless communication at the adequate communication rate across the walls of the rooms R1 to R3. This means that the gateway device 30, the communication device 100a and the wireless terminal TE1 located in the same room are able to make mutual wireless communication, while the communication devices 100a to 100c are unable to make mutual wireless communication. In the working environment that the building has thick floors such as to prevent the communication devices 100a to 100c from making wireless communication at the adequate communication rate across the floors, the communication devices 100a to 100c may be placed in a distributed manner on different floors of the building.

In the above working environment, the combined use of wireless communication with PLC in the network system 20 enables the communication devices 100a to 100c to adequately forward communication packets as a whole network. For example, a communication packet sent from the wireless terminal TE3 toward the wireless terminal TE1 is received by the communication device 100c by wireless communication, is forwarded from the communication device 100c to the communication device 100a by PLC, and is further forwarded from the communication device 100a to the wireless terminal TE1 by wireless communication. In another example, a communication packet sent from the wireless terminal TE3 toward the Internet INT is received by the communication device 100c by wireless communication and is forwarded from the communication device 100c to the communication device 100a by PLC. This communication packet is then forwarded from the communication device 100a to the gateway 30 by wireless communication and is further forwarded from the gateway 30 to the Internet INT.

In the working environment that the building has thick floors such as to prevent the communication devices 100a to 100c from making wireless communication at the adequate communication rate across the floors, placing the communication devices 100a to 100c in the distributed manner on the different floors of the building enables communication packets to be adequately forwarded as a whole network. This is also true in the working environment that the communication devices 100a to 100c are located out of the respective radio coverage areas.

According to this embodiment, the settings for wireless communication are unified among the gateway 30 and the communication devices 100a to 100c. In other words, communication setup information (hereinafter also referred to as "setup information") for common (the same) wireless communication is set in the gateway 30 and in the communication devices 100a to 100c. The setup information may be, for example, ESSID (Extended Service Set Identifier). The setup information may include information regarding encryption settings (e.g., the encryption system and the length of encryption key) and information regarding authentication settings, in addition to ESSID. This provides the user with the seamless wireless roaming environment. For example, when the user who has used the wireless terminal TE1 in the room R1 carries the wireless terminal TE1 and moves to the room R2, no settings are newly required to connect the wireless terminal TE1 with the communication device 100b and enable wireless communication therebetween.

### A-2. General Structure of Communication Device 100

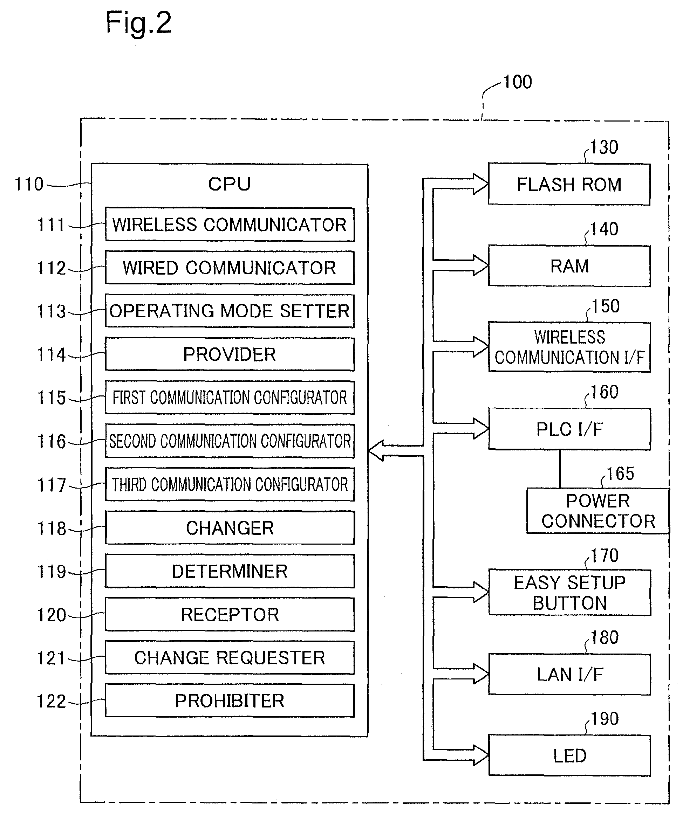

Fig. 2 illustrates the general structure of the communication device 100. As illustrated, the communication device 100 includes a CPU 110, a flash ROM 130, a RAM 140, a wireless communication interface (I/F) 150, a PLC interface 160, a power connector 165, an easy setup button 170, a LAN interface 180 and an LED 190, which are interconnected by a bus. In the following description, when a certain component included in specific one of the communication devices 100a to 100c is to be explained, the corresponding alphabetical symbol "a", "b" or "c" is added to the end of the numerical symbol assigned to the certain component of the communication device 100. For example, the CPU of the communication device 100b is expressed as "CPU 110b".

The CPU 110 loads and executes a program, such as firmware, stored in the flash ROM 130, on the RAM 140 to control the overall operations of the communication device 100. The CPU 110 executes this program to serve as a wireless communicator 111, a wired communicator 112, an operating mode setter 113, a provider 114, a first communication configurator 115, a second communication configurator 116, a third communication configurator 117, a changer 118, a determiner 119, a receptor 120, a change requester 121 and a prohibiter 122. The details of these functional blocks will be described later.

The wireless communication interface 150 is a control circuit to establish wireless communication in conformity with a wireless LAN standard. The wireless communication interface 150 is provided with hardware, such as a modulator, an amplifier and an antenna. The wireless communication interface 150 is controlled by the wireless communicator 111 of the CPU 110 to work as an access point. The wireless communicator 111 performs wireless communication, based on communication settings information. According to the embodiment, the wireless communication interface 150 may alternatively work as a station by the control of the wireless communicator 111. In other words, the wireless communicator 111 enables one wireless communication interface 150 to selectively work either as the access point or as the station.

According to this embodiment, while WPS process is performed between the communication device 100a and the gateway 30, the wireless communication interface 150 works as the station as described later in detail. In the other timing, the wireless communication interface 150 works as the access point. In the application without using WPS, for example, when the setup information is registered in the communication device 100a by the user's manual entry, the wireless communication interface 150 may work only as the access point. According to another embodiment, the communication device 100 may be configured to have two wireless communication interfaces, where one works as the access point and the other works as the station.

The PLC interface 160 or wired interface is a control circuit to establish communication with PLC. The power connector 165 is connected with the power line 40 to receive the operating voltage of the communication device 100. The PLC interface 160 is connected with the power connector 165. The PLC interface 160 is provided with hardware, such as a mixing circuit to superimpose the transmission data on the power voltage received via the power connector 165 and an isolating circuit to isolate the received data from the power voltage. The operations of the PLC interface 160 are controlled by the wired communicator 112 of the CPU 110 that enables wired communication.

The easy setup button 170 is operated by the user to provide a start command for starting WPS process to the communication device 100. An adequate interface may be employed to receive the start command. For example, in the communication device 100 equipped with a display, GUI (Graphical User Interface) may be employed for the easy setup button 170.

The LAN interface 180 is an interface for enabling communication via a wired LAN.

According to this embodiment, this wired LAN interface 180 conforms to the IEEE802.3 standard.

The LED 190 is provided as a notifier to notify the user of the operating status of the communication device 100. The details of notification will be described later. The notifier is not limited to the LED but may be other display devices, such as a display.

### A-3. Method of Sharing Setup Information in Network System 20

In the network system 20, the same setup information regarding wireless communication is shared by the gateway 30 and the communication devices 100. The operating mode is set in each of the communication devices 100 to share the setup information. The operating mode includes "first operating mode" and "second operating mode". The "first operating mode" is set in an access point selected among two or more access points (i.e., communication devices 100a to 100c in the embodiment). The "second operating mode" is set in the other access points but the selected access point set in the "first operating mode". In the "first operating mode", the selected access point provides the setup information configured in advance in the selected access point to the other access points. In the "second operating mode", on the other hand, each of the other access points receives the setup information configured in advance in the selected access point set in the "first operating mode". In the description hereof, the access point set in the "first operating mode" is called "master", and the access point set in the "second operating mode" is called "slave". According to the embodiment, each of the communication devices 100 autonomously sets either the "first operating mode" or the "second operating mode".

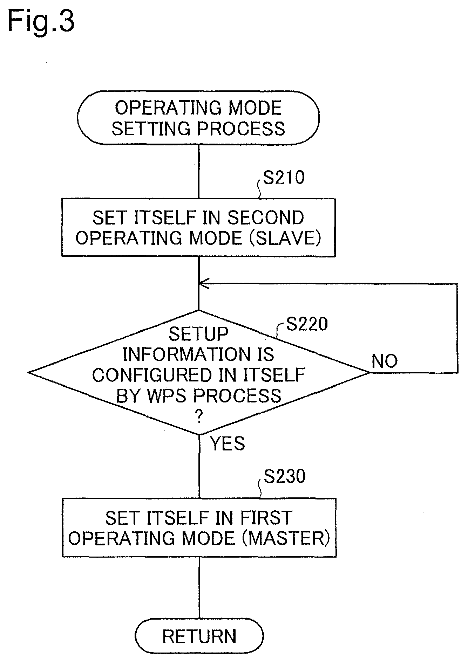

Fig. 3 shows a flow of operating mode setting process. By this "operating mode setting process", each of the communication devices 100 autonomously sets either the first operating mode or the second operating mode in itself. The operating mode setting process is performed by the CPU 110 of the communication device 100 as the operation of the operating mode setter 113. In the operating mode setting process, the CPU 110 first sets the second operating mode in itself (step S210). This means that the communication device 100 is set in the second operating mode as the default to work as the slave.

After setting the second operating mode in itself, the CPU 110 stands by to configure the setup information in the communication device 100 by WPS process (step S220). When the setup information is configured in the communication device 100 by the WPS process (step S220: YES), the CPU 110 sets the communication device 100 in the first operating mode (step S230). More specifically, the communication device 100 works as the master when the setup information is configured in itself by the WPS process. The operating mode setting process is then terminated. This setting process enables each of the communication devices 100 to autonomously set the operating mode. The setting process accordingly does not require the user to set the operating mode in each of the communication devices 100, thus improving the user-friendliness. The communication device 100 may not be necessarily set in the second operating mode as the default. For example, the communication device 100 may set the operating mode to the first operating mode in response to configuring the setup information in itself by the WPS process, while setting the operating mode to the second operating mode in response to receiving the beacon sent from the master (described later in detail).

The following describes the procedure how the gateway 30 and the communication devices 100 share the setup information regarding wireless communication in the operating mode set as described above. The procedure described below includes (1) setup phase, (2) setup sharing phase and (3) setup changing phase. In the "setup phase", the setup information is configured in one of the communication devices 100 (e.g., communication device 100a in the following description). In the "setup sharing phase", the setup information is shared among the communication devices 100a to 100c. In the "setup changing phase", the setup information shared among the communication devices 100a to 100c is changed.

### A-3-1. Setup Phase

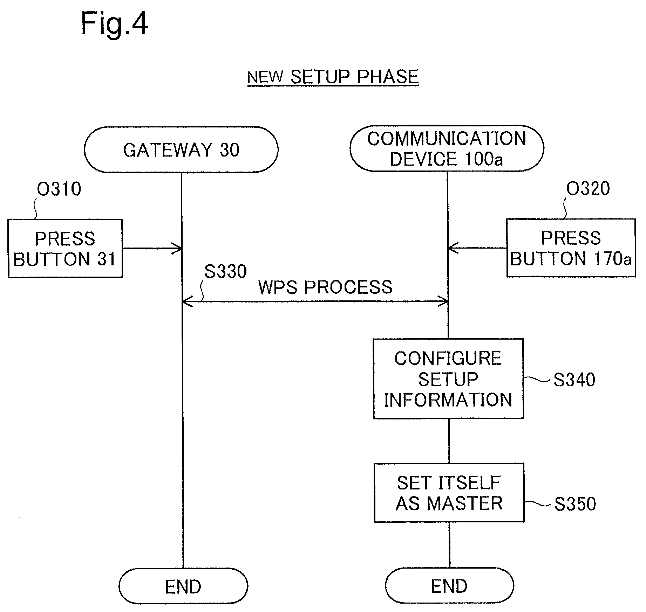

Fig. 4 shows a flow of the setup phase. In the setup phase, a series of operations are performed between the gateway 30 and one of the communication devices 100 (i.e., communication device 100a in the embodiment) located within the radio coverage of the gateway 30. The setup phase may thus be regarded as the process to share the setup information between the gateway 30 and the communication device 100a.

As shown in Fig. 4, the setup phase is triggered by the user's successive operations of the button 31 provided on the gateway 30 and the easy setup button 170a provided on the communication device 100a (operations 0310 and 0320) within a specified period of time. When the user presses the button 31 on the gateway 30 and subsequently presses the easy setup button 170a on the communication device 100a, WPS process by wireless communication is performed between the gateway 30 and the communication device 100a (step S330). As is known in the art, during the WPS process, the access point makes communication with the station to generate setup information and provide the station with the generated setup information, thereby enabling the setup information to be shared between the access point and the station. This WPS process is performed according to a registration protocol.

The communication device 100a of the embodiment may work either as the access point or as the station by the WPS process. More specifically, when detecting a press of the easy setup button 170a, the communication device 100a sends a probe request to search for the access point. When no access point is found as the result of the search, the communication device 100a sets the wireless communication interface 150 as the access point. When any access point is found as the result of the search, on the other hand, the communication device 100a sets the wireless communication interface 150 as the station. According to this embodiment, the communication device 100a detects the gateway 30 as the access point. The communication device 100a accordingly works as the station in the WPS process. At step S330, the gateway 30 generates setup information and provides the generated setup information to the communication device 100a by wireless communication.

When receiving the provided setup information, the communication device 100a stores the received setup information into the RAM 140a and configures the setup information as communication settings in the communication device 100a (step S340). In the communication device 100a, the processing of steps S330 and S340 described above is performed as the operation of the first communication configurator 115a of the CPU 110a.

After configuring the setup information, the CPU 110a sets the communication device 100a as the master (step S350) according to the operating mode setting process (Fig. 3) described above. The communication devices 100b and 100c do not perform the WPS process and are accordingly set as the slaves. The setup phase is then terminated. When the gateway 30 is capable of establishing communication with PLC, the communication device 100a and the gateway 30 may be located out of the respective radio coverage areas. In such cases, one of the communication devices 100a to 100c may be tentatively located within the radio coverage of the gateway 30 and subsequently relocated in the user's desired position after the processing in the setup phase described above.

### A-3-2. Setup Sharing Phase

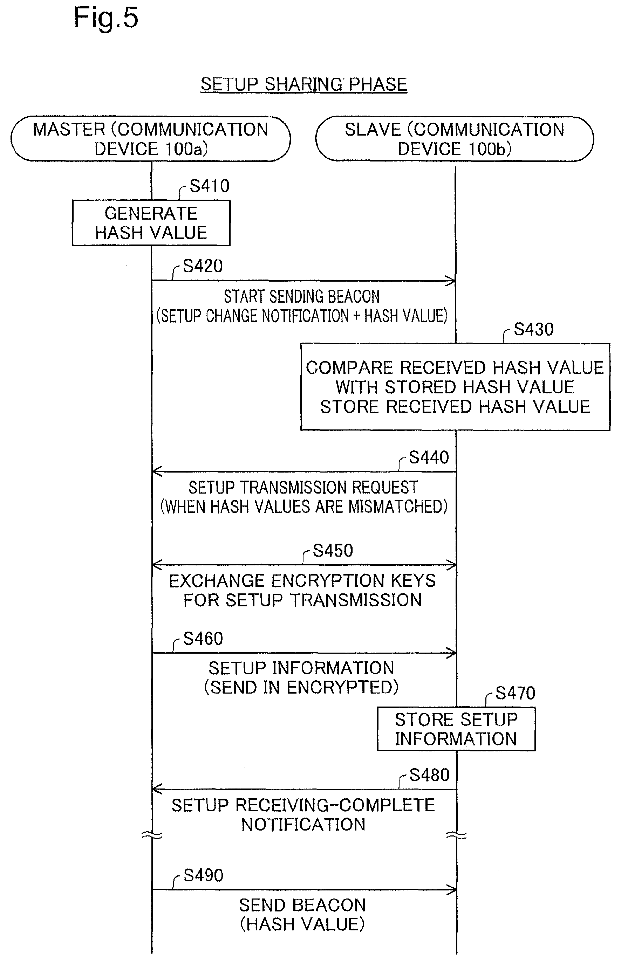

Fig. 5 shows a flow of the setup sharing phase. The setup sharing phase is triggered by configuring the setup information in the communication device 100a set as the master. In the setup sharing phase, series of operations are performed between the master and each of the slaves. The illustrated example of Fig. 5 shows series of operations performed between the communication device 100a working as the master and the communication device 100b working as the slave. Communication between the communication device 100a and the communication device 100b is made with PLC in the setup sharing phase. As shown in Fig. 5, at the start of the setup sharing phase, the CPU 110a of the communication device 100a as the master first uses time information when the setup information is configured in itself by the WPS process and the content of the configured setup information as the key to generate a hash value according to a hash function (step S410). This hash value is used as identification information when each of the communication devices 100b and 100c as the slave checks the identity of the setup information configured in the communication device 100a as the master by the procedure described below.

The key used for generating the hash value is not limited to the above example but may be determined adequately. In order to improve the performance of checking the identity of the setup information, the key preferably includes any element intrinsic to each group of setup information. For example, only the time information may be used as the key. In another example, only the content of the setup information may be used as the key. The function used to generate the identification information, such as hash value, is preferably an irreversible one-way function. Generating the identification information by the one-way function includes the content of the setup information as part of the input values of the function and effectively prevents any unauthorized user who has no right to access the network system 20 and illegally intercepts the identification information from being notified of the content of the setup information from the intercepted identification information.

After generating the hash value, the CPU 110a of the communication device 100a as the master starts sending beacon (step S420). The beacon includes a setup change notification and a hash value. The "setup change notification" means information showing that there is a change in setup information configured in the communication device 100a, for example, information showing that the setup information is configured for the first time in the communication device 100a or is changed to be newly configured in the communication device 100a. The hash value is the value set at step S410 as described above. This beacon is repeatedly sent at specified times by broadcast. The specified times may be periodic times or non-periodic times. According to this embodiment, there is communication other than the beacon to share the setup information among the communication devices 100a to 100c. In the description below, packets involved in such communication are collectively referred to as "control packets". The control packet is communication packet (frame) processed on the data link layer (layer 2) of the OSI reference model. The control packet may be any communication packet that supports both broadcast and unicast on the layer 2, for example, communication packet processed on the network layer (layer 3) of the OSI reference model.

This control packet includes a first field indicating the type of the control packet. Each of the communication devices 100 refers to the first field of the received control packet to identify the type of the control packet. The type of the control packet is not limited to the beacon but may be set for each communication packet transmitted between the master and the slave in the setup sharing phase or in the setup changing phase described later. The control packet also includes a second field indicating the type of the operating mode set in the communication device 100 as the source of the control packet. The type of the operating mode includes "first operating mode", "second operating mode" and "standalone mode". Each of the communication devices 100 refers to the second field of the received control packet and thereby identifies which of the master, the slave and the standalone device is the communication device 100 as the source of the control packet. The standalone mode and the standalone device will be described later.

Referring back to Fig. 5, when transmission of beacon starts and the communication device 100b as the slave receives the beacon, the CPU 110b of the communication device 100b compares the hash value included in the received beacon with the hash value stored in the RAM 140b (step S430). The CPU 110b of the communication device 100b stores the hash value included in the received beacon into the RAM 140b (step S430). More specifically, whenever receiving the beacon, the CPU 110b stores the hash value included in the received beacon into the RAM 140b. The CPU 110b then compares the hash value included in the last-received beacon with the hash value included in the second last-received beacon. When the two hash values are matched as the result of comparison, this means that there is no change in setup information configured in the communication device 100a as the master. When the two hash values are mismatched, on the other hand, this means that there is a change in setup information configured in the communication device 100a between the two beacons. When the communication device 100b receives the beacon for the first time, no hash value received in the past has been stored in the RAM 140b, so that the CPU 110b cannot compare the two hash values. In this case, the CPU 110b determines that the two hash values are mismatched. The fact that the communication device 100b receives the beacon for the first time means that the setup information is configured for the first time in the communication device 100a as the master.

When the two hash values are mismatched as the result of comparison, the CPU 110b sends a setup transmission request to the communication device 100a by unicast (step S440). The setup transmission request is a message that requests the communication device 100a as the master to provide the setup information configured in advance in the master. When the two hash values are matched, the processing of and after step S440 is skipped.

When the communication device 100a receives the setup transmission request from the communication device 100b as the slave, the CPU 110a of the communication device 100a and the CPU 110b of the communication device 100b make communication to exchange encryption keys for setup transmission (step S450). The "encryption key for setup transmission" is an encryption key used for encrypted communication when the communication device 100a provides the communication device 100b with setup information. For example, an AES (Advanced Encryption Standard) key exchange protocol may be employed for the processing of step S450. This protocol is called 4 Way-Handshake.

After exchanging the encryption keys for setup transmission, the CPU 110a of the communication device 100a sends the setup information configured in advance in the communication device 100a to the communication device 100b, as the operation of the provider 114a (step S460). This communication is encrypted with the encryption key for setup transmission. The operation of the provider 114a is regarded as the operation of activating the communication device 100a in the set operating mode.

When receiving the setup information, the CPU 110b of the communication device 100b decrypts the received setup information and stores the decrypted setup information into the RAM 140b to configure the setup information in itself, as the operation of the second communication configurator 116b (step S470). After configuration of the setup information, the CPU 110b sends a setup receiving-complete notification to the communication device 100a (step S480). This series of operations enables the setup information to be shared between the communication device 100a and the communication device 100b and in other words, configures the common setup information. The setup sharing phase is then terminated.

When WPS process is performed between the gateway 30 or the communication device 100 and specific one of the wireless terminals TE1 to TE3 as the station after sharing the setup information among the gateway 30 and the respective communication devices 100 in the setup sharing phase, the gateway 30 or the communication device 100 may perform the following procedures. The gateway 30 or the communication device 100 may provide the setup information configured in itself to the specific one of the wireless terminals TE1 to TE3 as the other side of the WPS process. This enables the wireless terminals TE1 to TE3 to join the network system 20 by only the user's simple operation. In this application, the communication device 100 provides the setup information but does not configure the setup information in itself. The WPS process performed between any of the wireless terminals TE1 to TE3 and the communication device 100 does not affect the operating mode setting process (Fig. 3).

The CPU 110a continues sending the beacon at regular intervals (step S490) even after receiving the setup receiving-complete notification from all the access points that establish communication with PLC (i.e., communication devices 100b and 100c in the embodiment). The communication device working as the slave executes the slave-side processing of steps S430 to S480 described above, whenever receiving the beacon. Even when the communication device as the slave is powered off during configuring the setup information in the communication device 100a for the first time, the communication device as the slave receives the beacon after power-on and executes the processing of steps S430 to S480 described above to share the setup information with the communication device 100a. This series of operations is similarly performed when a communication device equivalent to the communication device 100 is added to the network system 20.

### A-3-3. Setup Changing Phase

The setup changing phase includes a mode that the master receives a change command for changing the setup information shared among the communication devices 100a to 100c and a mode that the slave receives the change command. In one application of the mode that the master receives the change command, for example, the user may perform the processing in the setup phase again. Performing the processing in the setup phase again changes the contents of the setup information configured in the communication device 100a.

There are various other applications of the mode that the master receives the change command. For example, the user may connect a personal computer with the wired LAN interface 180 to enter desired setup information from the personal computer, and the master may receive the entered setup information. In another example, the user may operate the wireless terminal TE1 to enter desired setup information from the wireless terminal TE1, and the master may receive the entered setup information by wireless communication. In one widely known configuration of these applications, the user enters the setup information via a WEB browser. The master may receive only the change command for changing the setup information, instead of receiving the entry of the setup information, and automatically generate the contents of the setup information. The communication device 100a as the master changes the setup information in response to receiving the change command and performs the processing in the setup sharing phase described above to share the changed setup information with the communication devices 100b and 100c.

According to the embodiment, as described above, even after sharing the setup information among the communication devices 100a to 100c, the communication device 100a as the master continues sending beacon including the hash value at regular intervals. Even when the communication device as the slave is powered off during changing the setup information configured in the communication device 100a, the communication device as the slave receives the beacon after power-on and executes the processing of steps S430 to S480 described above to share the setup information with the communication device 100a. This series of operations is similarly performed when a communication device equivalent to the communication device 100 is added to the network system 20.

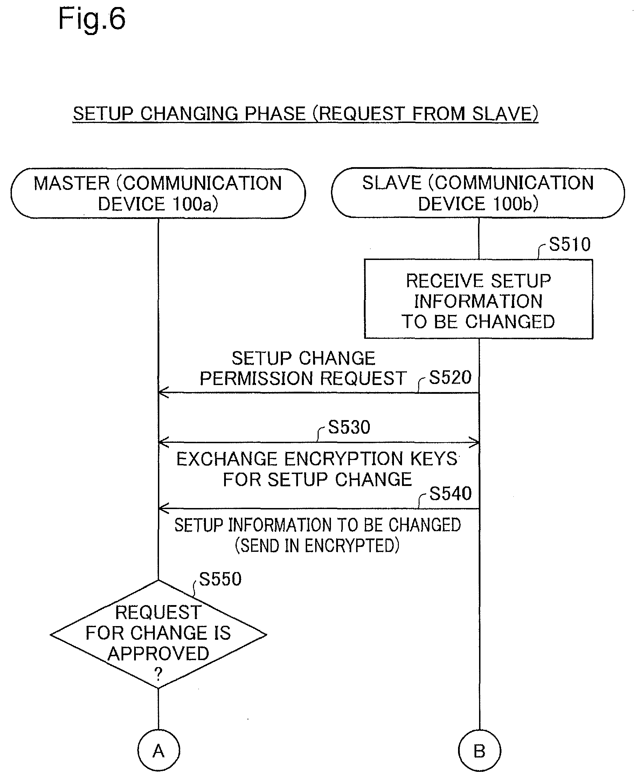

Fig. 6 shows a flow of the setup changing phase in the mode that the slave receives the change command. PLC is employed for communication in the setup changing phase. In this case, the slave receives the change command and asks for permission to change the setup information from the master. More specifically, as shown in Fig. 6, the CPU 110b of the communication device 100b as the slave first receives setup information to be changed, i.e., setup information of the contents reflecting the user's change request, as the operation of the receptor 120b (step S510). There are various applications of the mode that the slave receives the setup information to be changed, like various applications of the mode that the master receives the change command as described above.

When receiving the setup information to be changed, the CPU 110b of the communication device 100b sends a setup change permission request to the communication device 100a as the master, as the operation of the change requester 121b (step S520). The "setup change permission request" is a message that requests to change the setup information configured in the communication device 100b. When the communication device 100a receives the setup change permission request and gives permission to change the setup information by series of operations described below, the communication device 100a performs the following procedures. The communication device 100a changes the setup information configured in advance in the communication device 100a to the contents of the setup information requested by the communication device 100b, in order to enable the setup information to be shared among the communication devices 100a to 100c. The setup change permission request is thus also regarded as a message that requests to change the setup information configured in the communication device 100a.

When the communication device 100a receives the setup change permission request from the communication device 100b as the slave, the CPU 110a of the communication device 100a and the CPU 110b of the communication device 100b make communication to exchange encryption keys for setup change (step S530). The "encryption key for setup change" is an encryption key used for encrypted communication when the communication device 100b notifies the communication device 100a of the setup information to be changed. For example, an AES key exchange protocol may be employed for the processing of step S530. After exchanging the encryption keys for setup change, the CPU 110b sends the setup information to be changed to the communication device 100a (step S540). This communication is encrypted with the encryption key for setup change.

When receiving the setup information to be changed, the CPU 110a determines whether the request for setup change is approved or denied, as the operation of the determiner 119a (step S550). This determination is based on the contents of the setup information to be changed. More specifically, the CPU 110a determines whether the security level of wireless communication is lowered by giving permission to change the setup information. This determination may be based on the encryption system. For example, changing the encryption system from AES to WEP or from AES to non-encryption lowers the security level, so that the request for setup change may be denied. The approval or denial for setup change in correlation to each change pattern of the encryption system may be registered in advance in the flash ROM 130. Even in the same encryption system, reducing the length of the encryption key lowers the security level, so that the request for setup change may be denied. Determining whether the request to change the setup information is approved or denied by taking into account the potential reduction of the security level in this manner effectively prevents the security level of the entire network system 20 from being lowered against the intention of the administrator of the network system 20 by the operation of the user who has the right to use the slave but no administrative privileges. The processing of step S550 may, however, be omitted. In this application, the CPU 110a gives permission to change the setup information, irrespective of the contents of the setup information to be changed.

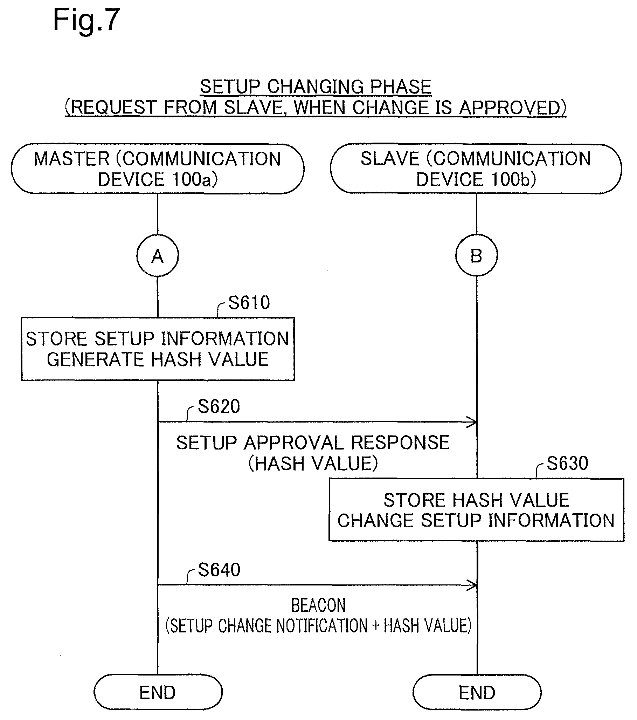

Fig. 7 shows a flow of the setup changing phase when the request to change the setup information is approved at step S550. When change of the setup information is approved, the CPU 110a of the communication device 100a stores the setup information to be changed, which is received from the communication device 100b, into the RAM 140a and changes the setup information, as the operation of the changer 118a (step S610). The CPU 110a of the communication device 100a then generates the hash value, based on the changed setup information (step S610). The method of generating the hash value is similar to the method employed at step S410 (Fig. 5) described above.

After generating the hash value, the CPU 110a sends back a setup approval response to the communication device 100b as the source of the setup change permission request (step S620). The setup approval response is a message to notify approval for setup change. The setup approval response includes the hash value generated at step S610 described above. In the meanwhile, the CPU 110b of the communication device 100b receives the setup approval response and stores the hash value included in the received setup approval response, as well as the setup information to be changed received at step S510 described above, into the RAM 140b, so as to change the setup information (step S630).

In the communication device 100a, after sending back the setup approval response, the CPU 110a sends beacon (step S640). The beacon includes the setup change notification and the hash value. The communication device 100c receives this beacon and performs the processing in the setup sharing phase (steps S430 to S480 in Fig. 5) described above to share the changed setup information with the communication devices 100a and 100b.

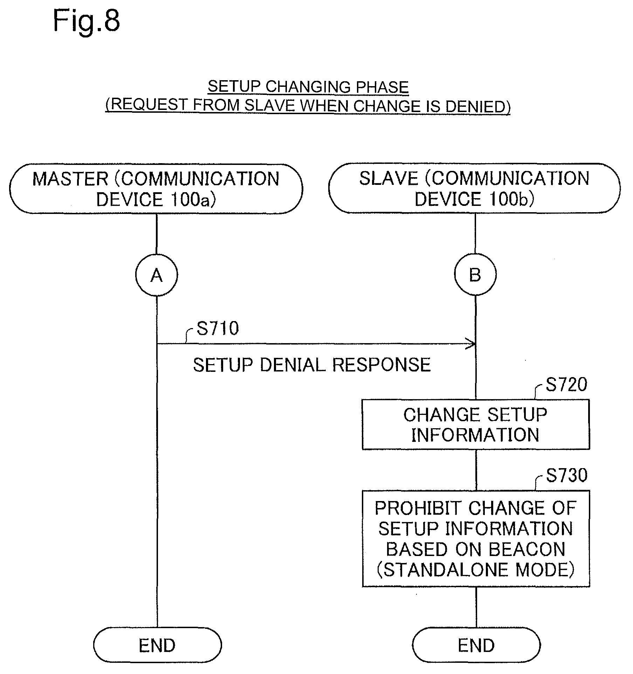

Fig. 8 shows a flow of the setup changing phase when the request to change the setup information is denied at step S550. When change of the setup information is denied, the setup information configured in the communication device 100a is not changed. When change of the setup information is denied, the CPU 110a of the communication device 100a sends back a setup denial response to the communication device 100b as the source of the setup change permission request (step S710). The setup denial response is a message to notify denial for setup change.

In the meanwhile, the CPU 110b of the communication device 100b receives the setup denial response and stores the setup information received at step S510 described above into the RAM 140b, so as to change the setup information, as the operation of the third communication configurator 117b (step S720). The CPU 110b then controls itself to a prohibition operating mode that prohibits change of the setup information based on beacon, as the operation of the prohibiter 122b (step S730). In this prohibition operating mode, the CPU 110b ignores the received beacon, so as not to change the setup information by the processing of steps S430 to S480 described above. Since the communication device 100a does not change the setup information as described above, the communication device 100c also does not change the setup information by the processing of steps S430 to S480. The processing of step S730 results in continuing the state that different setup information is configured only in the communication device 100b among the communication devices 100a to 100c. The prohibition operating mode controlled at step S730 is thus called "standalone mode". The communication device 100 working in the standalone mode is called "standalone device". In the standalone mode, the communication device 100b lights up the LED 190 in a specified light-emitting form, so as to notify that the communication device 100b works in the standalone mode.

Controlling the communication device 100b in the standalone mode meets the user's request to change the setup information configured in the communication device 100b. For example, the user may be allowed to make communication between a wireless terminal compatible with only an encryption system in the low security level, such as WEP, and the communication device 100b. This process does not change the setup information configured in the communication devices 100a and 100c and thereby prevents the security level of the entire network system 20 from being lowered by changing the setup information configured in the communication device 100b. According to another embodiment, the CPU 110b may be configured not to change the setup information received at step S510 at all, when receiving the setup denial response. This modified configuration more effectively prevents the security level of the entire network system 20 from being lowered. According to another embodiment, the slave expected to control itself in the standalone mode may ask for the master's permission to shift to the standalone mode and may shift to the standalone mode only when the permission is given. The approval or denial for the shift to the standalone mode may be specified in advance in the communication device 100 by the administrator. This prevents the salve from shifting to the standalone mode against the intention of the administrator of the network system 20. As the result, this makes the administrator's operation of the network system 20 easier and improves the convenience.

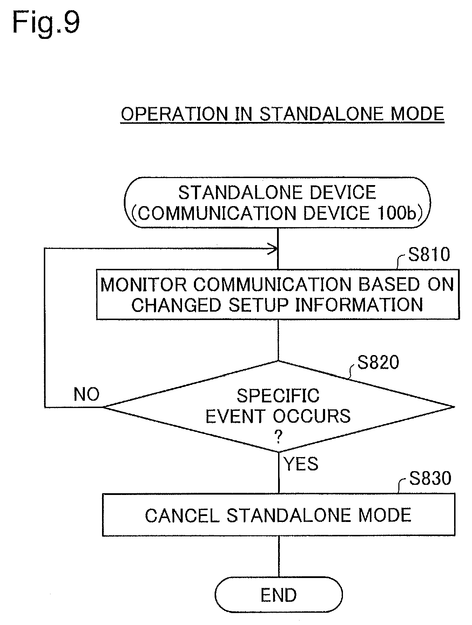

Fig. 9 shows a flow of the operation of the communication device 100b as the standalone device. As illustrated, on the start of control in the standalone mode, the CPU 110b of the communication device 100b monitors wireless communication based on the changed setup information (step S810) and stands by until the occurrence of a specific event in the monitored wireless communication (step S820: NO).

The specific event includes an event that leads to the assumption that there is no subsequent wireless communication based on the changed setup information. For example, the specific event may include an event that no communication packet is received for a specified time period from a wireless terminal connected with the communication device 100b using the changed setup information. In another example, the specific event may include an event that there is no wireless terminal during establishment of connection after establishment of connection for wireless communication between the communication device 100b and a wireless terminal using the changed setup information. In still another example, the specific event may include an event that a predetermined time period has elapsed since the absence of any wireless terminal during establishment of the connection.

When detecting the occurrence of the specific event (step S820: YES), the CPU 110b cancels the standalone mode, as the operation of the prohibiter 122b (step S830). The CPU 110b is then allowed to change the setup information by the processing of steps S430 to S480 described above, when receiving the beacon next time. This allows the same setup information to be shared again among the communication devices 100a to 100c. This process effectively prevents the standalone mode from being continued after the communication device 100b is not supposed to work in the standalone mode. This process automatically cancels the standalone mode, thus enhancing the user-friendliness. The standalone device may be regarded as one mode of the slave or may be regarded as a different mode from the slave. In the latter case, the standalone device may reset itself in the second operating mode when cancelling the standalone mode.

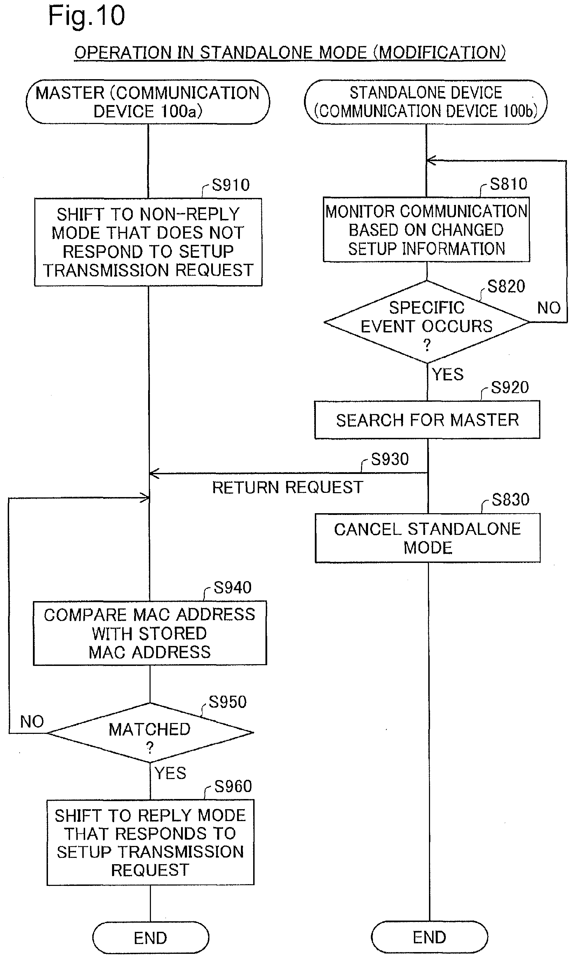

Fig. 10 shows a flow of operation in the standalone mode according to one modification. In the above embodiment, the communication device 100b autonomously cancels the standalone mode and returns to the wireless network sharing the setup information. In the modification described below, however, the communication device 100b may return to the wireless network sharing the setup information, based on the operation of the communication device 100a as the master. According to the modification, the CPU 110a of the communication device 100a registers a network identifier (e.g., MAC address) of the communication device 100b as the destination of the setup denial response into the RAM 140a, when sending the setup denial response at step S710 (Fig. 8) described above. On completion of the processing in the setup changing phase (Fig. 8), the communication devices 100a and 100b performs the processing flow of Fig. 10. The same processes in Fig. 10 as those of Fig. 9 are expressed by the same step numbers and are not specifically described in detail here.

As shown in Fig. 10, in the standalone mode according to this modification, in the standalone mode, after registry of the MAC address as the destination of the setup denial response, the CPU 110a of the communication device 100a controls itself to a non-reply mode (step S910). In the "non-reply mode", there is no reply to the setup transmission request (step S440 in Fig. 5) from the communication device 100b having the registered MAC address. The processing of steps S450 to S480 (Fig. 5) is not performed subsequently, even when the communication device 100b sends the setup transmission request to the communication device 100a. The communication device 100b is thus not allowed to return to the wireless network sharing the setup information.

In the meanwhile, after the start of the control in the standalone mode, the CPU 110b of the communication device 100b performs the processing of steps S810 and S820 described above. When detecting the occurrence of the specific event (step S820: YES), the CPU 110b searches for the master (step S920). Passive scan or active scan with control packets may be employed for this search, in conformity with the method when a station searches for the access point in a wireless LAN. Even when the communication device working as the master is changed during control of the communication device 100b in the standalone mode, the processing of step S920 adequately identifies the master. In the description below, it is assumed that there is no change of the master.

When the search results in detecting the master, the CPU 110b sends a return request to the communication device 100a as the detected master (step S930). The "return request" is a message to ask for return to the wireless network sharing the setup information. Information indicating the self operation in the standalone mode is included in a second field of the return request. When receiving an ACK representing reception of the return request from the communication device 100a, the CPU 110b cancels the standalone mode (step S830). In this stage, because of the processing at step S910 described above, the communication device 100b is not allowed to receive the setup information from the communication device 100a.

In the meanwhile, when receiving the return request from the communication device 100b as the standalone device, the CPU 110a of the communication device 100a compares the MAC address registered in the RAM 140 in the course of transmission of the setup denial response with the MAC address of the source of the return request (step S940). Even when a return request is received from a communication device other than the standalone device, the CPU 110a ignores the received return request. When the two MAC addresses are mismatched as the result of comparison (step S950: NO), the CPU 110a stands by to receive a return request again. When the two MAC addresses are matched as the result of comparison (step S950: YES), on the other hand, the CPU 110a cancels the non-reply mode and controls itself to the reply mode to respond to the setup transmission request from the communication device 100b as the destination of the setup denial response (step S960). The CPU 110b then changes the setup information by the processing of steps S430 to S480 described above, when receiving the beacon next time. This allows the same setup information to be shared again among the communication devices 100a to 100c. According to another embodiment, the communication device 100a may send a notification indicating the shift to the reply mode to the communication device 100b after the processing of step S960, and the communication device 100b may perform the processing of step S830 described above after receiving the notification.

As described above, the master receives the setup change permission request from the slave and stores the identification information on the source of the setup change permission request, when the request to change the setup information is not approved. The master subsequently works in the third operating mode that does not provide to the communication device as the source of the setup change permission request with the setup information. When receiving a return request from the communication device as the source of the setup change permission request during the operation in the third operating mode, the master may perform authentication of the slave as the source of the return request based on the stored identification information and cancels the third operating mode only on the occasion of successful authentication. This enables only the communication device that has shared the setup information to rejoin the network sharing the setup information.

### A-4. Advantageous Effects

In the network system 20 including the communication devices 100 described above, the communication device 100 as the master provides the communication device 100 as the slave with the setup information regarding wireless communication, and the communication device 100 as the slave configures the provided setup information in itself. The same setup information is thus configured in the respective communication devices 100 and is shared by the respective communication devices. This provides the user with the seamless wireless roaming environment. This also does not require the user to enter and configure the same setup information in the respective communication devices 100 by manual operations. The user can thus readily unify the setup information among the communication devices 100.

The network system 20 employs PLC for communication to send and receive setup information. In the PLC network, a communication device newly joining the network is generally required to go through authentication process. This prevents one communication device 100 from providing the setup information unlimitedly to other communication devices 100. In other words, only the communication device 100 going through the PLC authentication process is allowed to share the setup information. This ensures the security.

### B. Modifications

Some modifications of the above embodiment are described below.

### B-1. Modification 1

Although the communication device 100a configures the setup information in itself by WPS process according to the above embodiment, the method of configuring the setup information is not limited to the WPS process. According to another embodiment, a protocol for making communication between two wireless communication devices and thereby providing setup information from one of the two wireless communication devices to the other of the wireless communication devices may be employed to configure the setup information. A typical example of such protocol other than WPS is AOSS (AirStation One-Touch Secure System, registered trademark by Buffalo Inc).

### B-2. Modification 2

Although the communication device 100 sets the operating mode in itself by the operating mode setting process (Fig. 3) according to the above embodiment, the method of setting the operating mode is not limited to this embodiment. For example, the communication device 100 may set itself as the master when the setup information is configured in itself by a predetermined method. The predetermined method may be, for example, the user's manual entry. In an application that a specific program is installed in the communication device 100, for example, the setup information configured in one communication device 100 may be stored in a storage medium, such as USB memory, by using the specific program and may be configured in another communication device 100 connected with the storage medium. In another example, the setup information configured in one communication device 100 may be configured in another communication device 100 via wired connection, such as Ethernet (registered trademark), by using the specific program. In the communication device equipped with near field communications interface, such as RFID (Radio Frequency Identification) or infrared, the entry via the near field communication interface may be employed for the same purpose.

According to another embodiment, the communication device 100 may not autonomously set the operating mode. For example, when the communication device 100 is equipped with reception means to receive the user's instruction on the operating mode to be set, the communication device 100 may set the operating mode in itself, based on the user's instruction received by the reception means. For example, the reception means may be a switch operative to select the operating mode, e.g., dip-switch. In another example, the reception means may be a display. In still another example, the reception means may receive the user's instruction via a WEB browser from a computer connected with the communication device 100, e.g., from a computer connected with the wired LAN interface 180.

### B-3. Modification 3

According to the above embodiment, the WPS process is performed between the gateway device 30 and the communication device 100a in the setup phase (Fig. 4). The WPS process may, however, be performed between two of the communication devices 100 when the gateway 30 is not included in the network system 20, for example, when a network that is not connected to an external network is established or when the communication device 100a has the router functions and is directly connected to an external network.

### B-4. Modification 4

The communication device 100 as the access point may support multi-SSID. The communication device 100 supporting multi-SSID enables one physical access point to work as multiple virtual access points or multiple logical access points. Different communication settings may be configured for the respective virtual access points. In this application, the master may provide the slave with setup information regarding only part of virtual access points among its multiple virtual access points. The slave may configure in itself the setup information regarding only part of virtual access points among its multiple of virtual access points provided by the master. This enables simultaneous establishment of a network having shared setup information and a network having independent setup information. This results in improving the flexibility of operation of the network using communication devices.

For example, part of the virtual access points may share the setup information of the high security level with the other communication devices 100, in order to establish the network of the high security level. The other virtual access points may be allowed to make communication at the relatively low security level. This meets both the requirements of the network security and the user-friendliness in an application that only part of users among a plurality of users of the network system 20 need to make communication at the low security level.

In the access point supporting multi-SSID, part of the virtual access points may be used as guest ports. The guest port is provided to enable a guest user other than the normal user of the access point to access the Internet INT. In this application, the respective communication devices 100 may not share the setup information regarding the guest ports. This separates communication of the guest user from the communication of the normal user, thus ensuring the security.

### B-5. Modification 5

According to another embodiment, the wireless network including the communication devices 100 may be divided into a plurality of networks, and one master may be located in each of the divisional networks and share the setup information with slaves in each divisional network. This embodiment may be implemented by the following procedure. Each of the communication devices 100 receives a network identifier (hereinafter referred to as network ID) entered by the user via specific reception means and sets the network ID in itself. The specific reception means may be any of various means, like the reception means for setting the operating mode described above in Modification 2.

Each of the communication devices 100 set as the master or the slave sends a control packet including the network ID. In the setup sharing phase, the master may provide the setup information to the slave as the source of a setup transmission request, only when receiving the setup transmission request including the same network ID as the network ID set in itself. In the meanwhile, the slave may perform the processing of steps S430 to S480 (Fig. 5) described above, only when receiving the beacon including the same network ID as the network ID set in itself. In the setup changing phase, the master and the slave respond to a control packet, only when receiving the control packet including the same network ID as the network ID set in itself. This enables easy establishment of a plurality of wireless networks having different shared setup information, thus improving the user-friendliness.

### B-6. Modification 6

The transmission frequency of beacon per unit time sent from the master may be varied according to the update status of the setup information configured in the master. For example, the transmission frequency may be set to a relatively low level for a specified time period since the change of the setup information configured in the master and may be changed to a relatively high level after elapse of the specified time period. This effectively reduces the power consumption of the master.

### B-7. Modification 7

The communication devices 100 use PLC, for example, to share the setup information according to the above embodiment. This embodiment is not limited to using PLC to share the setup information, as any suitable communication interface could be used. For example, Ethernet (registered trademark) may be used to share the setup information.

### B-8. Modification 8

According to the above embodiment, the respective communication devices 100 have the same configuration. The user is thus not required to determine the location of each communication device 100 by taking into account the difference in functions among the respective communication devices 100. An exclusive master device may be provided as the communication device 100. Similarly an exclusive slave device may be provided as the communication device 100. These exclusive devices do not require the functions of the operating mode setter 113. The exclusive master device may have only the functions required for the operations of the master out of the functions of the CPU 110 described above. More specifically, the CPU 110 of the exclusive master device may have the functions of only the wireless communicator 111, the wired communicator 112, the provider 114, the first communication configurator 115, the changer 118 and the determiner 119. The functions of at least one of the first communication configurator 115, the changer 118 and the determiner 119 may be omitted as needed basis. Similarly the exclusive slave device may have only the functions required for the operations of the slave out of the functions of the CPU 110 described above. More specifically, the CPU 110 of the exclusive slave device may have the functions of only the wireless communicator 111, the wired communicator 112, the second communication configurator 116, the third communication configurator 117, the receptor 120, the change requester 121 and the prohibiter 122. The functions of at least one of the third communicator configurator 117, the receptor 120, the change requester 121 and the prohibiter 122 may be omitted as needed basis. The structures as such exclusive devices advantageously simplify the functions of the respective communication devices 100.

### B-9. Modification 9

According to another embodiment, the communication device 100 may notify the master of the shift to the standalone mode or the cancellation of the standalone mode in the form of a control packet. According to yet another embodiment, the communication device 100 as the master may send a control packet to another communication device 100 as a request for notifying the master of the operating mode set in another communication device 100, and may be notified of the operating mode set in another communication device 100 by a response to the request. The communication device 100 as the master may be configured to output the notified operating mode. The output may be, for example, transmission of a WEB screen or display on the monitor of the communication device 100. This enables the administrator of the network system 20 to be readily notified of the operating status of each communication device 100, thus enhancing the convenience of network management.

### B-10. Modification 10

The invention may also be implemented according to any of the following aspects.

According to a first aspect, there is provided a communication device configurable as one of a plurality of communication devices, such that each enables wireless communication as an access point and enables the wireless communication based on common communication setup information. This communication device comprises: a wireless communicator that enables wireless communication as an access point, based on communication setup information; a wired communicator that enables communication by wire; an operating mode setter that sets one of two operating modes in the communication device, wherein the two operating modes include a first operating mode that provides another communication device with the communication setup information and a second operating mode that receives the communication setup information from another communication device working in the first operating mode; and a provider that provides the another communication device working in the second operating mode with the communication setup information by communication via the wired communicator, when the communication device works in the first operating mode.

The communication device according to the first aspect enables the communication setup information to be shared with another communication device, thus providing seamless wireless roaming environment. The communication setup information provided to the another communication device working in the second operating mode by the provider of the communication device working in the first operation mode may be communication setup information that is configured for the first time in the communication device working in the first operating mode. The communication setup information provided to the another communication device working in the second operating mode by the provider of the communication device working in the first operation mode may alternatively be communication setup information that is changed and newly configured in the communication device working in the first operating mode.

According to one embodiment of the communication device of the first aspect, the operating mode setter may set operating mode of the communication device to the second operating mode. The operating mode setter may reset the operating mode of the communication device to the first operating mode, when wireless communication is configured based on the communication setup information in the communication device by a specified method.

The communication device of this embodiment can autonomously set the operating mode and does not require the user to specify the operating mode for the communication device. This accordingly improves the user-friendliness.

According to another embodiment, the communication device of the first aspect may further include a first communication configurator that uses a protocol for making communication between two wireless communication devices and thereby providing the communication setup information from one wireless communication device to the other wireless communication device, in order to configure the wireless communication based on the communication setup information in the communication device as the other wireless communication device. The operating mode setter may set the communication device in the first operating mode, when the wireless communication is configured in the communication device by a method using the protocol as the specified method. The provider may provide the another communication device working in the second operating mode with the communication setup information configured in the communication device by using the protocol.

The communication device of this embodiment does not require the user to specify the operating mode or enter the setup information. This accordingly improves the user-friendliness.

According to another embodiment of the communication device of the first aspect, the wired communicator may repeatedly send a packet including identification information of the communication setup information, which specifies configuration of the wireless communication in the communication device, at specified timings, when the communication device works in the first operating mode.

Even when the another communication device is powered off during configuring the communication setup information for the first time in the communication device or during changing and newly configuring the communication setup information, the another communication device can detect configuring the communication setup information for the first time in the communication device or changing and newly configuring the communication setup information, based on the identification information. In one application, when receiving a specific packet to detect configuring the communication setup information for the first time in the communication device or changing and newly configuring the communication setup information based on the identification information, the another communication device may give the communication device a request to provide the communication setup information, and the communication device may provide the another communication device with the communication setup information in response to the request. This enables the another communication device to promptly share the communication setup information with the communication device.

According to another embodiment, the communication device of the first aspect may further include a changer that changes the communication setup information configured in the communication device, based on a change request, which is received by the wired communicator from the another communication device working in the second operating mode, as a requirement to change the configuration of wireless communication in the communication device, when the communication device works in the first operating mode.

When the communication setup information configured in the communication device is changed by the changer of this embodiment, the communication device of the first aspect enables the changed communication setup information to be shared with the another communication device. The user can thus change the shared communication setup information from the another communication device set in the second operating mode. This accordingly improves the user-friendliness.

According to another embodiment, the communication device of the first aspect may further include a determiner that determines whether change of the communication setup information configured in the communication device is approved or denied, based on the change request, when the change request is received. The determiner may determine that change of the communication setup information is approved, only when security level of the wireless communication of the communication device is not lowered by changing the communication setup information. The changer may change the communication setup information configured in the communication device, only when the determiner determines that change of the communication setup information is approved.

The communication device of this embodiment effectively prevents the shared communication setup information from being changed by the user who does not have administrative privileges of a network including the communication device but has the right to use via the another communication device set in the second operating mode to lower the security level of the network, against the intention of the user with the administrative privileges of the network.

According to another embodiment, the communication device of the first aspect may further include a second communication configurator that receives the communication setup information from another communication device working in the first operating mode and configures wireless communication based on the communication setup information in the communication device, when the communication device works in the second operating mode.

The communication device of this embodiment enables the communication setup information to be shared with the another communication device.

According to another embodiment, the communication device of the first aspect may further include: a receptor that receives a change command for changing the communication setup information configured in the communication device; and a change requester that sends a change request to the another communication device working in the first operating mode, as a requirement to change the configuration of wireless communication in the another communication device working in the first operating mode to settings based on the change command received by the receptor, when the communication device works in the second operating mode.

When the another communication device structured according to the communication device of the first aspect receives the change request and changes the communication setup information, the changed communication setup information is shared between the communication device and the another communication device. This enables the shared communication setup information to be changed by the user via the communication device set in the second operating mode. This accordingly improves the user-friendliness.

According to another embodiment, the communication device of the first aspect may further include: a third communication configurator that changes the communication setup information configured in the communication device to the settings based on the change command, when the change request is sent but when the another communication device working in the first operating mode does not change the configuration of wireless communication based on the change request; and a prohibiter that prohibits subsequent configuration of wireless communication by the second communication configurator, when the third communication configurator changes the communication setup information.

The user of the communication device can use the communication device with changing the communication setup information to independent communication settings independently of a network, which includes the another communication device and has shared communication setup information. This enables the user of the communication device to use the communication device by a desired method, while reducing the effect on the network including the another communication device.

According to another embodiment of the communication device of the first aspect, the prohibiter may cancel the prohibition on occurrence of a specified event with respect to the wireless communication based on the communication setup information changed by the third communication configurator.

The communication device of this embodiment effectively prevents the independent communication settings from being continuously maintained when the user of the communication device does not intend to continuously use the communication device with changing the communication setup information to the independent communication settings independently of the network, which includes the another communication device and has shared communication setup information. This embodiment automatically cancels the prohibition, thus improving the user-friendliness.

According to another embodiment of the communication device of the first aspect, the wireless communicator may be configured to enable one physical access point to work as multiple virtual access points or multiple logical access points that make wireless communication based on different sets of the communication setup information. The second communicator configurator may configure the wireless communication with respect to part of virtual access points that are not all of the multiple virtual access points.

According to yet another embodiment of the communication device of the first aspect, the wireless communicator may be configured to enable one physical access point to work as multiple virtual access points or multiple logical access points that make wireless communication based on different sets of the communication setup information. The provider may provide the another communication device working in the second operating mode with the communication setup information with respect to part of virtual access points that are not all of the multiple virtual access points, when the communication device works in the first operating mode.

These embodiments enable simultaneous establishment of a network having shared communication setup information and a network having independent communication setup information. This results in improving the flexibility of operation of the network using communication devices. For example, part of virtual access points may share communication setup information of the high security level with another communication device, in order to establish a wireless network of the high security level. The other virtual access points may be allowed to make communication at the relatively low security level. This meets both the requirements of the network security and the user-friendliness in an application that only part of users among a plurality of users of the network including the communication device and the another communication device need to make communication at the low security level.

According to another embodiment of the communication device of the first aspect, the wired communicator may perform power line communication using a power line as the wire.

The communication device performing power line communication generally joins the network through the authentication process. In other words, the communication device in the state allowing for power line communication is authenticated. This prevents the communication device from providing the communication setup information unlimitedly to another communication device, thus ensuring the security.

According to another embodiment, the communication device of the first aspect may store an identifier for a network that the communication device belongs to. The provider may provide the communication setup information to only another communication device that is set in the second operating mode and has an identical identifier with the identifier stored in the communication device, an identifier for a network that the another communication device belongs to.

Allocating network identifiers to the communication device and the another communication device ensures easy establishment of a plurality of wireless networks.

The invention is not limited to the communication device described above but may be implemented by any of various other applications, e.g., a communication method, a method of sharing communication setup information, a program for the communication device and a storage medium in which the program is recorded. The technical features disclosed in the first aspect may be adopted for any of these applications. The following describes a communication system according to a second aspect of the disclosure, which may include a plurality of second communication devices.

According to the second aspect, there is provided a communication system including a first communication device and a second communication device that respectively enable wireless communication as an access point and enable the wireless communication based on common communication setup information. Each of the first communication device and the second communication device comprises: a wireless communicator that enables wireless communication as an access point, based on communication setup information; and a wired communicator that enables communication by wire. Each of the first communication device and the second communication device is set in one of two operating modes, wherein the two operating modes include a first operating mode that provides another communication device with the communication setup information and a second operating mode that receives the communication setup information from the communication device working in the first operating mode. The communication device working in the first operating mode provides the communication device working in the second operating mode with the communication setup information by communication via the wired communicator. The communication device working in the second operating mode receives the communication setup information from the communication device working in the first operating mode and configures the wireless communication based on the received communication setup information.

According to a third aspect, there is provided a method of sharing communication setup information to make wireless communication between a plurality of communication devices, each including a wireless communicator that enables wireless communication as an access point and a wired communicator that enables communication by wire. The method sets one communication device out of the plurality of communication devices to work in a first operating mode that provides another communication device with the communication setup information. The method sets the another communication device to work in a second operating mode that receives the communication setup information from the one communication device working in the first operating mode. The method provides the communication setup information from the one communication device working in the first operating mode to the another communication device working in the second operating mode by communication via the wired communicator. The method configures the wireless communication in the another communication device working in the second operating mode, based on the communication setup information provided from the one communication device working in the first operating mode.

All the plurality of elements included in each of the embodiments described above are not essential, but part of the plurality of elements may be adequately changed, modified, altered, omitted, replaced with other elements or partly deleted, in order to solve part or all of the problems described previously or in order to achieve part or all of the advantageous effects described above. Part or all of the technical features included in each embodiment may be combined with part or all of the technical features included in another embodiment to provide another independent embodiment of the invention, in order to solve part or all of the problems described previously or in order to achieve part or all of the advantageous effects in the description.

The foregoing has described embodiments of the invention in detail. The invention is, however, not limited to the above embodiments but various modifications and variations may be made to the embodiments without departing from the scope of the invention, which is defined by the claims. For example, the elements of the respective aspects or the elements of the respective embodiments may be adequately combined, omitted or conceptualized to the broader concept with respect to the embodiments that solve at least part of the problems described previously or the embodiments that achieve at least part of the advantageous effects described above.

## Claims

1. A communication device (100) comprising:
a wireless communicator (111) that controls the communication device to function as a wireless access point based on communication setup information;
a wired communicator (112) that controls the communication device to communicate via a wired interface, wherein the wired interface is a power line interface;
an operating mode setter (113) that sets the communication device (100a,100b,100c) to operate in one of two operating modes including a first operating mode in which the communication device provides another communication device (100a,100b,100c) with the communication setup information and a second operating mode in which the communication device receives the communication setup information from another communication device operating in the first operating mode; and
a provider (114,114a) that controls the wired communicator to provide the another communication device operating in the second operating mode with the communication setup information for functioning as the wireless access point via the wired interface when the communication device operates in the first operating mode.

2. The communication device according to claim 1, wherein
the operating mode setter sets the communication device to operate in the second operating mode, and
the operating mode setter resets the communication device to operate in the first operating mode when wireless communication is configured by a predetermined method at the communication device based on the communication setup information.

3. The communication device according to claim 2, further comprising:
a first communication configurator (115) that implements a predetermined protocol to receive the communication setup information from the another communication device, wherein
the operating mode setter sets the communication device to operate in the first operating mode when the wireless communication is configured in the communication device by a method that includes implementing the predetermined protocol, and
the provider controls the wired communicator to provide the another communication device operating in the second operating mode with the communication setup information configured in the communication device by communicating with the another communication device by implementing the predetermined protocol.

4. The communication device according to claim 1, 2 or 3, wherein
the wired communicator controls the communication device to repeatedly send a packet including identification information corresponding to the communication setup information at specified timings when the communication device operates in the first operating mode; preferably
wherein the identification information specifies a configuration of the wireless communication of the communication device.

5. The communication device according to claim 1, 2, 3 or 4, further comprising:
a changer (118) that controls changing the communication setup information in the communication device based on a change request received via the wired interface from the another communication device operating in the second operating mode when the communication device operates in the first operating mode.

6. The communication device according to claim 5, further comprising:
a determiner (119) that determines whether change of the communication setup information is approved or denied based on the change request, wherein
the determiner determines that a change of the communication setup information is approved only when a security level of the wireless communication of the communication device is not lowered by changing the communication setup information, and
the changer changes the communication setup information configured in the communication device only when the determiner determines that a change of the communication setup information is approved.

7. The communication device according to any preceding claim, further comprising:
a second communication configurator (116) that controls receiving the communication setup information from another communication device operating in the first operating mode and configures wireless communication at the communication device based on the received communication setup information when the communication device operates in the second operating mode.

8. The communication device according to claim 7, further comprising:
an interface that receives a command to change the communication setup information configured in the communication device; and
a change requester (121) that controls the communication device to send a change request to the another communication device operating in the first operating mode to change the configuration of wireless communication in the another communication device operating in the first operating mode to settings based on the change command received by the interface when the communication device operates in the second operating mode.

9. The communication device according to claim 8, further comprising:
a third communication configurator (117) that controls changing the communication setup information configured in the communication device to the settings based on the change command when the change request is sent but when the another communication device operating in the first operating mode does not change the configuration of wireless communication based on the change request; and
a prohibiter (122) that controls prohibiting subsequent configuration of wireless communication by the second communication configurator, when the third communication configurator changes the communication setup information;
preferably wherein the prohibiter controls canceling the prohibition on occurrence of a specified event with respect to the wireless communication based on the communication setup information changed by the third communication configurator.

10. The communication device according to claim 8 or 9, wherein
the wireless communicator controls one physical access point to operate as multiple virtual access points or multiple logical access points based on respective different sets of communication setup information;
preferably wherein the second communicator configurator controls wireless communication with respect to a subset of virtual access points of the multiple virtual access points.

11. The communication device according to any preceding claim, wherein
the wireless communicator controls a physical access point to operate as a plurality of virtual access points or a plurality of logical access points based on respective different sets of the communication setup information;
preferably wherein the provider controls the communication device to provide the another communication device operating in the second operating mode with the communication setup information with respect to a subset of the plurality of virtual access points when the communication device operates in the first operating mode.

12. The communication device according to any preceding claim, wherein
the communication device stores an identifier corresponding to a network to which the communication device belongs, wherein
the provider controls the communication device to provide the communication setup information only to another communication device operating in the second operating mode and that has an identifier identical to that stored by the communication device.

13. A communication system (20) including a first communication device (100a,100b,100c) and a second communication device (100a,100b,100c), each of the first communication device and the second communication device being as claimed in any preceding claim and comprising:
a wireless communicator (111) that controls the communication device to function as a wireless access point based on communication setup information; and
a wired communicator (112) that controls the communication device to communicate via a wired interface wherein the wired interface is a power line interface, and wherein
each of the first communication device and the second communication device is set to operate in one of two operating modes including a first operating mode in which the communication device provides another communication device with the communication setup information and a second operating mode in which the communication device receives the communication setup information from another communication device operating in the first operating mode,
the communication device operating in the first operating mode provides the another communication device operating in the second operating mode with the communication setup information for functioning as the wireless access point via the wired interface, and
the communication device operating in the second operating mode receives the communication setup information from the another communication device operating in the first operating mode and configures the wireless communication based on the received communication setup information.

14. A method of sharing communication setup information between a plurality of communication devices (100a,100b,100c), each communication device including a wireless communicator that controls the communication device to function as a wireless access point and a wired communicator that controls the communication device to communicate via a wired interface, wherein the wired interface is a power line interface, the method comprising:
setting one communication device out of the plurality of communication devices to operate in a first operating mode in which the one communication device provides another communication device with the communication setup information;
setting the another communication device to operate in a second operating mode in which the another communication device receives the communication setup information from the one communication device operating in the first operating mode;
providing the communication setup information for functioning as the wireless access point from the one communication device operating in the first operating mode to the another communication device operating in the second operating mode via the wired interface; and
configuring the wireless communication in the another communication device operating in the second operating mode based on the communication setup information provided from the one communication device operating in the first operating mode.

## Patentansprüche

1. Kommunikationsvorrichtung (100), die Folgendes umfasst:
eine drahtlose Kommunikationseinrichtung (111), welche die Kommunikationsvorrichtung so steuert, dass sie als drahtloser Zugangspunkt auf der Basis von Kommunikationseinrichtungsinformationen funktioniert;
eine drahtgebundene Kommunikationseinrichtung (112), welche die Kommunikationsvorrichtung so steuert, dass sie über eine drahtgebundene Schnittstelle kommuniziert, wobei die drahtgebundene Schnittstelle aus einer Stromleitungsschnittstelle besteht;
eine Betriebsmoduseinstelleinrichtung (113), welche die Kommunikationsvorrichtung (100a, 100b, 100c) so einstellt, dass sie in einem von zwei Betriebsmodi betrieben wird, die einen ersten Betriebsmodus, in welchem die Kommunikationsvorrichtung einer anderen Kommunikationsvorrichtung (100a, 100b, 100c) die Kommunikationseinrichtungsinformationen zur Verfügung stellt, und einen zweiten Betriebsmodus aufweisen, in welchem die Kommunikationsvorrichtung die Kommunikationseinrichtungsinformationen von einer anderen Kommunikationsvorrichtung empfängt, die in dem ersten Betriebsmodus betrieben wird; und
einen Diensteanbieter (114, 114a), der die drahtgebundene Kommunikationseinrichtung so steuert, dass der anderen Kommunikationsvorrichtung, die in dem zweiten Betriebsmodus betrieben wird, die Kommunikationseinrichtungsinformationen zum Funktionieren als drahtloser Zugangspunkt über die drahtgebundene Schnittstelle zur Verfügung gestellt werden, wenn die Kommunikationsvorrichtung in dem ersten Betriebsmodus betrieben wird.

2. Kommunikationsvorrichtung nach Anspruch 1, wobei
die Betriebsmoduseinstelleinrichtung die Kommunikationsvorrichtung so einstellt, dass sie in dem zweiten Betriebsmodus betrieben wird, und
die Betriebsmoduseinstelleinrichtung die Kommunikationsvorrichtung so zurückstellt, dass sie in dem ersten Betriebsmodus betrieben wird, wenn drahtlose Kommunikation durch ein vorbestimmtes Verfahren an der Kommunikationsvorrichtung auf der Basis der Kommunikationseinrichtungsinformationen konfiguriert ist.

3. Kommunikationsvorrichtung nach Anspruch 2, die des Weiteren Folgendes umfasst:
eine erste Kommunikationskonfigurationseinrichtung (115), welche ein vorbestimmtes Protokoll implementiert, um die Kommunikationseinrichtungsinformationen von der anderen Kommunikationsvorrichtung zu empfangen, wobei
die Betriebsmoduseinstelleinrichtung die Kommunikationsvorrichtung so einstellt, dass sie in dem ersten Betriebsmodus betrieben wird, wenn die drahtlose Kommunikation in der Kommunikationsvorrichtung durch ein Verfahren konfiguriert ist, welches Implementieren des vorbestimmten Protokolls aufweist, und
der Diensteanbieter die drahtgebundene Kommunikationseinrichtung so steuert, dass der anderen Kommunikationsvorrichtung, die in dem zweiten Betriebsmodus betrieben wird, die Kommunikationseinrichtungsinformationen zur Verfügung gestellt werden, die in der Kommunikationsvorrichtung durch Kommunizieren mit der anderen Kommunikationsvorrichtung durch Implementieren des vorbestimmten Protokolls konfiguriert sind.

4. Kommunikationsvorrichtung nach Anspruch 1, 2 oder 3 wobei
die drahtgebundene Kommunikationseinrichtung die Kommunikationsvorrichtung so steuert, dass zu bestimmten Zeiten ein Paket wiederholt gesendet wird, das Identifikationsinformationen aufweist, die den Kommunikationseinrichtungsinformationen entsprechen, wenn die Kommunikationsvorrichtung in dem ersten Betriebsmodus betrieben wird; vorzugsweise
wobei die Identifikationsinformationen eine Konfiguration der drahtlosen Kommunikation der Kommunikationsvorrichtung spezifizieren.

5. Kommunikationsvorrichtung nach Anspruch 1, 2, 3 oder 4, die des Weiteren Folgendes umfasst:
eine Änderungseinrichtung (118), welche das Ändern der Kommunikationseinrichtungsinformationen in der Kommunikationsvorrichtung auf der Basis einer Änderungsanforderung steuert, die über die drahtgebundene Schnittstelle von der anderen Kommunikationsvorrichtung empfangen wird, die in dem zweiten Betriebsmodus betrieben wird, wenn die Kommunikationsvorrichtung in dem ersten Betriebsmodus betrieben wird.

6. Kommunikationsvorrichtung nach Anspruch 5, die des Weiteren Folgendes umfasst:
eine Bestimmungseinrichtung (119), die bestimmt, ob dem Ändern der Kommunikationseinrichtungsinformationen auf der Basis der Änderungsanforderung zugestimmt wird oder ob sie abgelehnt wird, wobei
die Bestimmungseinrichtung bestimmt, dass einer Änderung der Kommunikationseinrichtungsinformationen nur dann zugestimmt wird, wenn ein Sicherheitsniveau der drahtlosen Kommunikation der Kommunikationsvorrichtung durch Ändern der Kommunikationseinrichtungsinformationen nicht abgesenkt wird, und
die Änderungseinrichtung die Kommunikationseinrichtungsinformationen, die in der Kommunikationsvorrichtung konfiguriert sind, nur dann ändert, wenn die Bestimmungseinrichtung bestimmt, dass einer Änderung der Kommunikationseinrichtungsinformationen zugestimmt wird.

7. Kommunikationsvorrichtung nach einem vorhergehenden Anspruch, die des Weiteren Folgendes umfasst:
eine zweite Kommunikationskonfigurationseinrichtung (116), welche das Empfangen der Kommunikationseinrichtungsinformationen von einer anderen Kommunikationsvorrichtung, die in dem ersten Betriebsmodus betrieben wird, steuert und die drahtlose Kommunikation an der Kommunikationsvorrichtung auf der Basis der empfangenen Kommunikationseinrichtungsinformationen konfiguriert, wenn die Kommunikationsvorrichtung in dem zweiten Betriebsmodus betrieben wird.

8. Kommunikationsvorrichtung nach Anspruch 7, die des Weiteren Folgendes umfasst:
eine Schnittstelle, an der ein Befehl empfangen wird, die Kommunikationseinrichtungsinformationen, die in der Kommunikationsvorrichtung konfiguriert sind, zu ändern; und
eine Änderungsanforderungseinrichtung (121), welche die Kommunikationsvorrichtung so steuert, dass eine Änderungsanforderung an die andere Kommunikationsvorrichtung, die in dem ersten Betriebsmodus betrieben wird, gesendet wird, um die Konfiguration drahtloser Kommunikation in der anderen Kommunikationsvorrichtung, die in dem ersten Betriebsmodus betrieben wird, auf der Basis des Änderungsbefehls auf Einstellungen zu ändern, der von der Schnittstelle empfangen wird, wenn die Kommunikationsvorrichtung in dem zweiten Betriebsmodus betrieben wird.

9. Kommunikationsvorrichtung nach Anspruch 8, die des Weiteren Folgendes umfasst:
eine dritte Kommunikationskonfigurationseinrichtung (117), welche das Ändern der Kommunikationseinrichtungsinformationen, die in der Kommunikationsvorrichtung konfiguriert sind, auf Einstellungen auf der Basis des Änderungsbefehls steuert, wenn die Änderungsanforderung gesendet wird, außer wenn die andere Kommunikationsvorrichtung, die in dem ersten Betriebsmodus betrieben wird, die Konfiguration drahtloser Kommunikation auf der Basis des Änderungsbefehls nicht ändert; und
eine Verhinderungseinrichtung (122), welche das Verhindern nachfolgender Konfiguration drahtloser Kommunikation durch die zweite Kommunikationskonfigurationseinrichtung steuert, wenn die dritte Kommunikationskonfigurationseinrichtung die Kommunikationseinrichtungsinformationen ändert;
vorzugsweise wobei die Verhinderungseinrichtung das Annullieren der Verhinderung angesichts eines speziellen Ereignisses hinsichtlich der drahtlosen Kommunikation auf der Basis der Kommunikationseinrichtungsinformationen steuert, die durch die dritte Kommunikationskonfigurationseinrichtung geändert werden.

10. Kommunikationsvorrichtung nach Anspruch 8 oder 9, wobei
die drahtlose Kommunikationseinrichtung einen einzigen physischen Zugangspunkt so steuert, dass er als zahlreiche virtuelle Zugangspunkte oder als zahlreiche logische Zugangspunkte auf der Basis jeweiliger unterschiedlicher Gruppen von Kommunikationseinrichtungsinformationen betrieben wird;
vorzugsweise wobei die zweite Kommunikationskonfigurationseinrichtung drahtlose Kommunikation hinsichtlich einer Teilgruppe virtueller Zugangspunkte der zahlreichen virtuellen Zugangspunkte steuert.

11. Kommunikationsvorrichtung nach einem vorhergehenden Anspruch, wobei
die drahtlose Kommunikationseinrichtung einen physischen Zugangspunkt so steuert, dass er als eine Vielzahl virtueller Zugangspunkte oder als eine Vielzahl logischer Zugangspunkte auf der Basis jeweiliger unterschiedlicher Gruppen der Kommunikationseinrichtungsinformationen betrieben wird;
vorzugsweise wobei der Diensteanbieter die Kommunikationsvorrichtung so steuert, dass der anderen Kommunikationsvorrichtung, die in dem zweiten Betriebsmodus betrieben wird, Kommunikationseinrichtungsinformationen hinsichtlich einer Teilgruppe der Vielzahl virtueller Zugangspunkte zur Verfügung gestellt werden, wenn die Kommunikationsvorrichtung in dem ersten Betriebsmodus betrieben wird.

12. Kommunikationsvorrichtung nach einem vorhergehenden Anspruch, wobei
die Kommunikationsvorrichtung eine Kennung speichert, die einem Netzwerk entspricht, zu dem die Kommunikationsvorrichtung gehört, wobei
der Diensteanbieter die Kommunikationsvorrichtung so steuert, dass die Kommunikationseinrichtungsinformationen nur einer anderen Kommunikationsvorrichtung zur Verfügung gestellt werden, die in dem zweiten Betriebsmodus betrieben wird, und die eine Kennung aufweist, die identisch zu derjenigen ist, die durch die Kommunikationsvorrichtung gespeichert wird.

13. Kommunikationssystem (20), das eine erste Kommunikationsvorrichtung (100a, 100b, 100c) und eine zweite Kommunikationsvorrichtung (100a, 100b, 100c) aufweist, wobei jede der ersten Kommunikationsvorrichtung und der zweiten Kommunikationsvorrichtung in einem vorhergehenden Anspruch beansprucht wird und Folgendes umfasst:
eine drahtlose Kommunikationseinrichtung (111), welche die Kommunikationsvorrichtung so steuert, dass sie als ein drahtloser Zugangspunkt auf der Basis von Kommunikationseinrichtungsinformationen funktioniert; und
eine drahtgebundene Kommunikationseinrichtung (112), welche die Kommunikationsvorrichtung so steuert, dass sie über eine drahtgebundene Schnittstelle kommuniziert, wobei die drahtgebundene Schnittstelle aus einer Stromleitungsschnittstelle besteht, und wobei
jede der ersten Kommunikationsvorrichtung und der zweiten Kommunikationsvorrichtung so eingestellt ist, dass sie in einem von zwei Betriebsmodi betrieben wird, die einen ersten Betriebsmodus, in welchem die Kommunikationsvorrichtung einer anderen Kommunikationsvorrichtung die Kommunikationseinrichtungsinformationen zur Verfügung stellt, und einen zweiten Betriebsmodus aufweisen, in welchem die Kommunikationsvorrichtung die Kommunikationseinrichtungsinformationen von einer anderen Kommunikationsvorrichtung empfängt, die in dem ersten Betriebsmodus betrieben wird,
die Kommunikationsvorrichtung, die in dem ersten Betriebsmodus betrieben wird, der anderen Kommunikationsvorrichtung, die in dem zweiten Betriebsmodus betrieben wird, die Kommunikationseinrichtungsinformationen zum Funktionieren als der drahtlose Zugangspunkt über die drahtgebundene Schnittstelle zur Verfügung stellt, und die Kommunikationsvorrichtung, die in dem zweiten Betriebsmodus betrieben wird, die Kommunikationseinrichtungsinformationen von der anderen Kommunikationsvorrichtung, die in dem ersten Betriebsmodus betrieben wird, empfängt und die drahtlose Kommunikation auf der Basis der empfangenen Kommunikationseinrichtungsinformationen konfiguriert.

14. Verfahren zur gemeinsamen Nutzung von Kommunikationseinrichtungsinformationen zwischen einer Vielzahl von Kommunikationsvorrichtungen (100a, 100b, 100c), wobei jede Kommunikationsvorrichtung eine drahtlose Kommunikationseinrichtung, welche die Kommunikationsvorrichtung so steuert, dass sie als ein drahtloser Zugangspunkt funktioniert, und eine drahtgebundene Kommunikationseinrichtung aufweist, welche die Kommunikationsvorrichtung so steuert, dass sie über eine drahtgebundene Schnittstelle kommuniziert, wobei die drahtgebundene Schnittstelle aus einer Stromleitungsschnittstelle besteht, wobei das Verfahren Folgendes umfasst:
Einstellen einer einzigen Kommunikationsvorrichtung von der Vielzahl von Kommunikationsvorrichtungen, um in einem ersten Betriebsmodus betrieben zu werden, in welchem die eine Kommunikationsvorrichtung einer anderen Kommunikationsvorrichtung die Kommunikationseinrichtungsinformationen zur Verfügung stellt;
Einstellen der anderen Kommunikationsvorrichtung, um in einem zweiten Betriebsmodus betrieben zu werden, in welchem die andere Kommunikationsvorrichtung die Kommunikationseinrichtungsinformationen von der einen Kommunikationsvorrichtung, die in dem ersten Betriebsmodus betrieben wird, empfängt;
Bereitstellen der Kommunikationseinrichtungsinformationen zum Funktionieren als der drahtlose Zugangspunkt von der einen Kommunikationsvorrichtung, die in dem ersten Betriebsmodus betrieben wird, an die andere Kommunikationsvorrichtung, die in dem zweiten Betriebsmodus betrieben wird, über die drahtgebundene Schnittstelle; und
Konfigurieren der drahtlosen Kommunikation in der anderen Kommunikationsvorrichtung, die in dem zweiten Betriebsmodus betrieben wird, auf der Basis der Kommunikationseinrichtungsinformationen, die von der einen Kommunikationsvorrichtung zur Verfügung gestellt werden, die in dem ersten Betriebsmodus betrieben wird.

## Revendications

1. Dispositif de communication (100) comprenant :
un communicateur sans fil (111) qui commande le dispositif de communication pour fonctionner comme un point d'accès sans fil en se basant sur des informations de paramétrage de communication ;
un communicateur par câble (112) qui commande le dispositif de communication pour communiquer via une interface par câble, dans lequel l'interface par câble est une interface de ligne électrique ;
un dispositif de paramétrage de mode de fonctionnement (113) qui paramètre le dispositif de communication (100a, 100b, 100c) pour fonctionner dans un de deux modes de fonctionnement incluant un premier mode de fonctionnement dans lequel le dispositif de communication procure à un autre dispositif de communication (100a, 100b, 100c) les informations de paramétrage de communication et un second mode de fonctionnement dans lequel le dispositif de communication reçoit les informations de paramétrage de communication en provenance d'un autre dispositif de communication fonctionnant dans le premier mode de fonctionnement ; et
un dispensateur (114, 114a) qui commande le communicateur par câble pour procurer à l'autre dispositif de communication fonctionnant dans le second mode de fonctionnement les informations de paramétrage de communication pour fonctionner en tant que point d'accès sans fil via l'interface par câble quand le dispositif de communication fonctionne dans le premier mode de fonctionnement.

2. Dispositif de communication selon la revendication 1, dans lequel
le dispositif de paramétrage de mode de fonctionnement paramètre le dispositif de communication pour fonctionner dans le second mode de fonctionnement, et
le dispositif de paramétrage de mode de fonctionnement réinitialise le dispositif de communication pour fonctionner dans le premier mode de fonctionnement quand la communication sans fil est configurée par un procédé prédéterminé au niveau du dispositif de communication en se basant sur les informations de paramétrage de communication.

3. Dispositif de communication selon la revendication 2, comprenant en outre :
un premier configurateur de communication (115) qui met en oeuvre un protocole prédéterminé pour recevoir les informations de paramétrage de communication en provenance de l'autre dispositif de communication, dans lequel
le dispositif de paramétrage de mode de fonctionnement paramètre le dispositif de communication pour fonctionner dans le premier mode de fonctionnement quand la communication sans fil est configurée dans le dispositif de communication par un procédé qui inclut la mise en oeuvre du protocole prédéterminé, et
le dispensateur commande le communicateur par câble pour procurer à l'autre dispositif de communication fonctionnant dans le second mode de fonctionnement les informations de paramétrage de communication configurées dans le dispositif de communication en communiquant avec l'autre dispositif de communication en mettant en oeuvre le protocole prédéterminé.

4. Dispositif de communication selon la revendication 1, 2 ou 3, dans lequel :
le communicateur par câble commande le dispositif de communication pour envoyer à plusieurs reprises un paquet incluant des informations d'identification correspondant aux informations de paramétrage de communication à des cadencements spécifiés de préférence quand le dispositif de communication fonctionne dans le premier mode de fonctionnement ;
dans lequel les informations d'identification spécifient une configuration de la communication sans fil du dispositif de communication.

5. Dispositif de communication selon la revendication 1, 2, 3 ou 4, comprenant en outre :
un changeur (118) qui commande le changement des informations de paramétrage de communication dans le dispositif de communication en se basant sur une demande de changement reçue via l'interface par câble en provenance de l'autre dispositif de communication fonctionnant dans le second mode de fonctionnement quand le dispositif de communication fonctionne dans le premier mode de fonctionnement.

6. Dispositif de communication selon la revendication 5, comprenant en outre :
un dispositif de détermination (119) qui détermine si un changement des informations de paramétrage de communication est approuvé ou rejeté en se basant sur la demande de changement, dans lequel
le dispositif de détermination détermine qu'un changement des informations de paramétrage de communication est approuvé seulement quand un niveau de sécurité de la communication sans fil du dispositif de communication n'est pas abaissé en changeant les informations de paramétrage de communication, et
le changeur change les informations de paramétrage de communication configurées dans le dispositif de communication seulement quand le dispositif de détermination détermine qu'un changement des informations de paramétrage de communication est approuvé.

7. Dispositif de communication selon n'importe quelle revendication précédente, comprenant en outre :
un deuxième configurateur de communication (116) qui commande la réception des informations de paramétrage de communication en provenance d'un autre dispositif de communication fonctionnant dans le premier mode de fonctionnement et qui configure la communication sans fil au niveau du dispositif de communication en se basant sur les informations de paramétrage de communication reçues lorsque le dispositif de communication fonctionne dans le second mode de fonctionnement.

8. Dispositif de communication selon la revendication 7, comprenant en outre :
une interface qui reçoit un ordre pour changer les informations de paramétrage de communication configurées dans le dispositif de communication ; et
un demandeur de changement (121) qui commande le dispositif de communication pour envoyer une demande de changement à l'autre dispositif de communication fonctionnant dans le premier mode de fonctionnement pour changer la configuration de communication sans fil dans l'autre dispositif de communication fonctionnant dans le premier mode de fonctionnement pour des paramétrages basés sur l'ordre de changement reçu par l'interface quand le dispositif de communication fonctionne dans le second mode de fonctionnement.

9. Dispositif de communication selon la revendication 8, comprenant en outre :
un troisième configurateur de communication (117) qui commande le changement des informations de paramétrage de communication configurées dans le dispositif de communication pour es paramétrages basés sur l'ordre de changement quand la demande de changement est envoyée, mais lorsque l'autre dispositif de communication fonctionnant dans le premier mode de fonctionnement ne change pas la configuration de communication sans fil en se basant sur la demande de changement ; et
un dispositif d'inhibition (122) qui commande l'inhibition de la configuration suivante de communication sans fil par le deuxième configurateur de communication, quand le troisième configurateur de communication change les informations de paramétrage de communication ;
de préférence dans lequel le dispositif d'inhibition commande l'annulation de l'inhibition lors de la survenance d'un événement spécifié en ce qui concerne la communication sans fil en se basant sur les informations de paramétrage de communication changées par le troisième configurateur de communication.

10. Dispositif de communication selon la revendication 8 ou 9, dans lequel
le communicateur sans fil commande un point d'accès physique pour fonctionner en tant que points d'accès virtuels multiples ou points d'accès logiques multiples en se basant sur des ensembles différents respectifs d'informations de paramétrage de communication ;
de préférence dans lequel le deuxième configurateur de communicateur commande la communication sans fil en ce qui concerne un sous-ensemble de points d'accès virtuels des points d'accès virtuels multiples.

11. Dispositif de communication selon n'importe quelle revendication précédente, dans lequel
le communicateur sans fil commande un point d'accès physique pour fonctionner comme une pluralité de points d'accès virtuels ou une pluralité de points d'accès logiques en se basant sur les ensembles différents respectifs des informations de paramétrage de communication ;
de préférence dans lequel le dispensateur commande le dispositif de communication pour procurer à l'autre dispositif de communication fonctionnant dans le second mode de fonctionnement les informations de paramétrage de communication en ce qui concerne un sous-ensemble de la pluralité de points d'accès virtuels quand le dispositif de communication fonctionne dans le premier mode de fonctionnement.

12. Dispositif de communication selon n'importe quelle revendication précédente, dans lequel
le dispositif de communication stocke un identificateur correspondant à un réseau auquel le dispositif de communication appartient, dans lequel
le dispensateur commande le dispositif de communication pour procurer les informations de paramétrage de communication seulement à un autre dispositif de communication fonctionnant dans le second mode de fonctionnement et en ce qu'il a un identificateur identique à celui stocké par le dispositif de communication.

13. Système de communication (20) incluant un premier dispositif de communication (100a, 100b, 100c) et un second dispositif de communication (100a, 100b, 100c), chacun du premier dispositif de communication et du second dispositif de communication étant selon n'importe quelle revendication précédente et comprenant :
un communicateur sans fil (111) qui commande le dispositif de communication pour fonctionner comme un point d'accès sans fil en se basant sur les informations de paramétrage de communication ; et
un communicateur par câble (112) qui commande le dispositif de communication pour communiquer via une interface par câble dans lequel l'interface par câble est une interface de ligne électrique, et dans lequel
chacun du premier dispositif de communication et du second dispositif de communication est paramétré pour fonctionner dans un de deux modes de fonctionnement incluant un premier mode de fonctionnement dans lequel le dispositif de communication procure à un autre dispositif de communication les informations de paramétrage de communication et un second mode de fonctionnement dans lequel le dispositif de communication reçoit les informations de paramétrage de communication en provenance d'un autre dispositif de communication fonctionnant dans le premier mode de fonctionnement,
le dispositif de communication fonctionnant dans le premier mode de fonctionnement procure à l'autre dispositif de communication fonctionnant dans le second mode de fonctionnement les informations de paramétrage de communication pour fonctionner en tant que point d'accès sans fil via l'interface par câble, et
le dispositif de communication fonctionnant dans le second mode de fonctionnement reçoit les informations de paramétrage de communication en provenance de l'autre dispositif de communication fonctionnant dans le premier mode de fonctionnement et configure la communication sans fil en se basant sur les informations de paramétrage de communication reçues.

14. Procédé de partage d'informations de paramétrage de communication entre une pluralité de dispositifs de communication (100a, 100b, 100c), chaque dispositif de communication incluant un communicateur sans fil qui commande le dispositif de communication pour fonctionner en tant que point d'accès sans fil et un communicateur par câble qui commande le dispositif de communication pour communiquer via une interface par câble, dans lequel l'interface par câble est une interface de ligne électrique, le procédé comprenant :
le paramétrage d'un dispositif de communication parmi la pluralité de dispositifs de communication pour fonctionner dans un premier mode de fonctionnement dans lequel le dispositif de communication particulier procure à un autre dispositif de communication les informations de paramétrage de communication ;
le paramétrage de l'autre dispositif de communication pour fonctionner dans un second mode de fonctionnement dans lequel l'autre dispositif de communication reçoit les informations de paramétrage de communication en provenance d'un dispositif de communication fonctionnant dans le premier mode de fonctionnement ;
la fourniture des informations de paramétrage de communication pour fonctionner en tant que point d'accès sans fil en provenance du dispositif de communication particulier fonctionnant dans le premier mode de fonctionnement à l'autre dispositif de communication fonctionnant dans le second mode de fonctionnement via l'interface par câble ; et
la configuration de la communication sans fil dans l'autre dispositif de communication fonctionnant dans le second mode de fonctionnement en se basant sur les informations de paramétrage de communication fournies en provenance du dispositif de communication particulier fonctionnant dans le premier mode de fonctionnement.
